# EUROPEAN PATENT APPLICATION

(11) **EP 0 808 780 A1**
(43) Date of publication of application: **26.11.1997**
(21) Application number: 97106601.4
(22) Date of filing: 22.04.1997
(51) Int. Cl.: B65D 90/00, B65D 88/12, B60P 3/08

(54) **Containing and transporting device with internal lift, particularly for shipment of motor cars**

(30) Priority: 21.05.1996 IT MI961022
(71) Applicant: Oglio, Luigi, 27036 Mortara (Pavia) (IT)
(72) Inventor: Oglio, Luigi, 27036 Mortara (Pavia) (IT)
(74) Representative: Zavattoni Gusmeroli, Maria Chiara

(57) **Abstract**

A containing device, of the container or swapbody type, has a structure comprising a base (1), a parallelepiped framework (2), a roof (3) and four side walls one of which consists of an entrance door, further comprises two opposite pairs of side uprights (5), a platform (4) that can slide vertically along said side uprights (5), as well as a lifting mechanism that provides said platform (4) with vertical movement. The containing device allows shipment of two motor cars one on top of the other and is completely independent in its operation, with considerable flexibility of use.

## Description

The present invention relates to the field of box-type containing devices for goods transportation called "containers" or "swapbodies" depending upon the category to which they belong. Henceforth, even when reference is made for the sake of simplicity to "containers", the term should be understood in its wider sense as a containing device for transportation comprising the items defined by the regulations as "containers" and those defined as "swapbodies".

As is known, a container consists in a structure of standard size comprising a base and a framework that defines a parallelepiped, on which are mounted four side walls and a roof, one of the short side walls consisting of a double door. This type of well-known structure is used to transport goods of any type, within the limits of weight and size fixed by the container builders.

A typical drawback of traditional containers is that they do not have internal structures on which to place the goods. This means that it is possible to exploit the whole useful height (2.76 mt) only by stacking packages that can withstand crushing. Alternatively, special supporting structures such as shelves and the like must be provided on which to place the goods that cannot be stacked. These structures will preferably be mobile, so that they can be removed from the container when they are not necessary but would merely take up space.

A case in which what is stated above becomes clear is that of motor cars, for which shipment with these container devices is any case preferable to avoid possible damage due to theft, vandalism or exposure to atmospheric agents. The solution currently adopted consists precisely in placing a bridge inside the container that substantially reproduces the upper bridge of a motor car transporter truck. This bridge is in fact positioned by means of a lift truck and fixed in the container in an inclined position, so that the first two cars can be loaded along special ramps. Afterwards, the lift truck raises the bridge with the first two cars into the horizontal position where it is fixed to the structure of the container, and another two cars enter the container along the ramps so as to fit under the bridge.

This arrangement has a series of drawbacks related to the use of a separate mobile structure, In the first place, the use of a lift truck is necessary both for loading and for unloading and this may not always be available and/or powerful enough for the task. In the second place, when the bridge is not used, it must be stored separately, taking up considerable space, together with the loading ramps. In the third place, introduction of the bridge into the container device and its subsequent removal therefrom imply a considerable waste of time and labour, approximately at least half an hour for each operation.

Moreover, the above solution also limits the flexibility of use of the container. In fact, if the container holding the car, after reaching its destination, must be used for another type of goods, requiring removal of the bridge, not only will there be the drawbacks described above, but, when the container has returned to its place of departure, it can be used again for shipment of motor cars only if a second bridge is available.

An aim of the present invention is to provide a container device that overcomes the above drawbacks.

This aim is achieved by means of a container device having the characteristics described in claim 1.

A first basic advantage of the device according to the invention is that of being completely autonomous in its operation, since it does not require external elements or machinery such as pontoons, loading ramps and lift trucks as described above.

A second advantage is that of considerably speeding up loading and unloading operations, which are reduced to a few minutes.

Yet another advantage of the device of the invention is that it can always be used anywhere and for any type of goods, whether stackable or not, whilst maintaining the possibility of exploiting the whole of its internal volume.

These and other advantages and characteristics of the container device according to the present invention will be made clearer to experts in the field by the following detailed description of a purely exemplary and non limiting embodiment thereof, with reference to the appended drawings, in which:
Figure 1 schematically shows a container according to the invention, in a partial perspective view, in an embodiment with an internal chain lift;
Figures 2, 3 and 4 schematically show the container in Figure 1, in an interrupted vertical median longitudinal section, with the lift in three operating positions;
Figures 5, 6 and 7 show details of the container relating to the specific use for the shipment of motor cars: Figure 5 shows a plan view from above of the platform 4, of which Figure 6 is a longitudinal section along the line A-A in Figure 5, whilst Figure 7 is a cross section of the base.

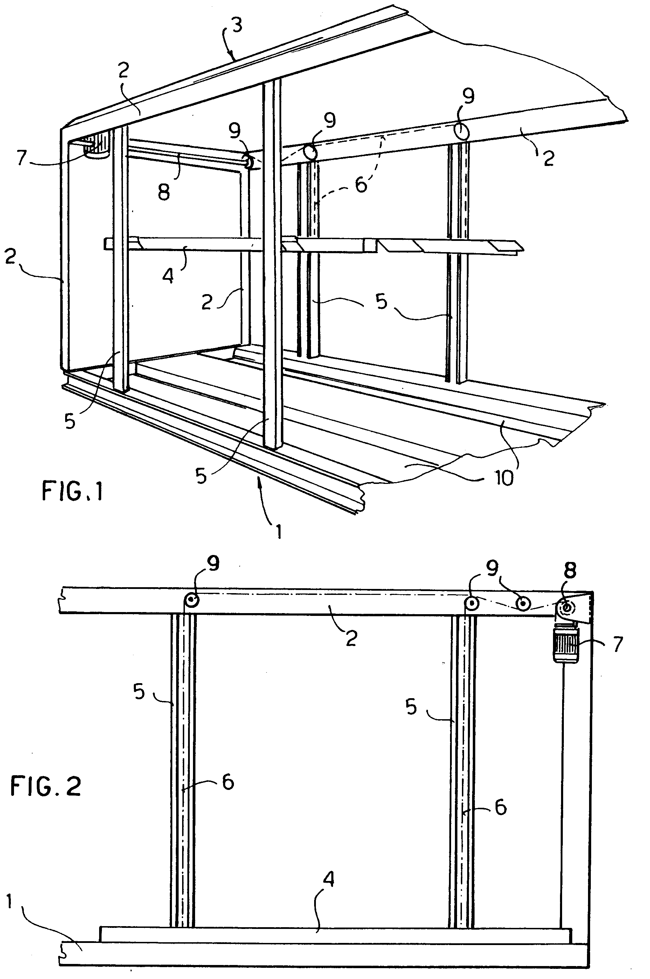

With reference to Figure 1, a container device according to the invention, container or swapbody, can be seen, shown without the side walls to allow an internal lift or hoist to be seen. For simplicity's sake, reference will be made henceforth only to containers. The container has a traditional structure comprising a base 1, a parallelepiped framework 2 (not completely visible in the figure), and a roof 3, the whole obviously complying in size with the standards for transportation on trains and/or ships.

The innovative aspect of the container is that it comprises an integrated lift essentially comprising a horizontal surface platform 4, described in greater detail below, that can slide vertically along lateral uprights 5 arranged in pairs along the longer sides of the container. In the example illustrated the vertical movement of the platform 4 is achieved by means of chains 6 (drawn schematically with dashed and dotted lines) moved by a geared motor 7 situated in an upper corner of the container. This movement is transmitted through a horizontal shaft 8, that extends the whole length of the container, and a plurality of transmission pinions 9 on which the chains 6 engage, until they descend along the uprights 5 and hook onto the platform 4 (see also Figs. 2-4).

The base 1 is preferably made with a pair of longitudinal wheel tracks 10, as will be described in greater detail below, whose width and distance are suitable even for motor cars having a very wide wheel base,

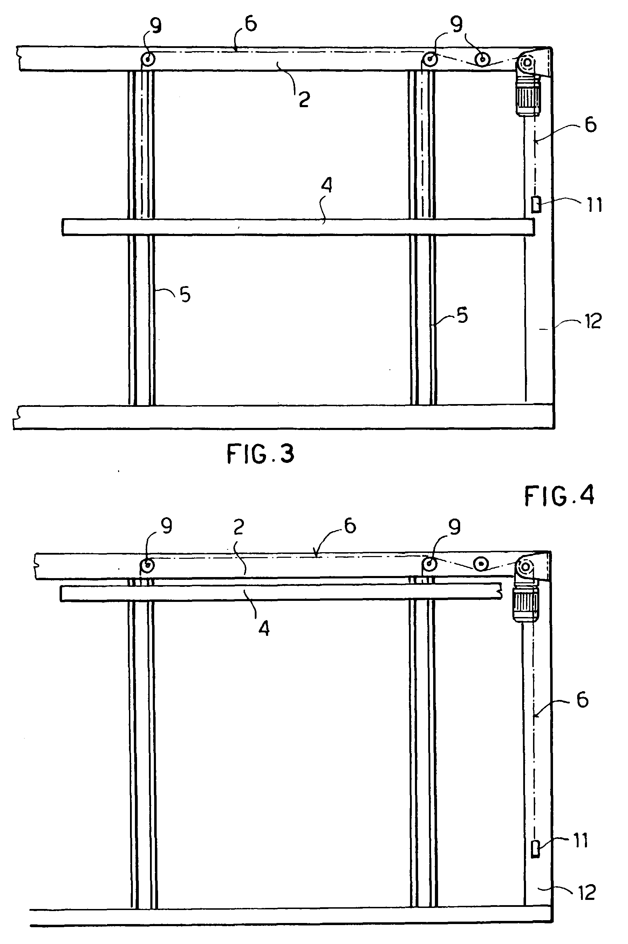

With reference to Figs. 2-4, simple methods of use of the container according to the present invention will now be described. In the view in Fig. 2, the platform 4 is completely lowered and rests on the base 1 so that goods can easily be loaded thereon, for example a motor car can be introduced. After this, the platform 4 is raised by the geared motor 7 into the intermediate position of Fig. 3, by means of a suitable control switch not illustrated in the figures. It is thus possible to load other goods into the container beneath the platform 4, or to introduce another motor car. If it is necessary to have the base 1 free, the platform 4 can be raised completely to the position in Fig. 4, so as not to take up any space. This is the case, for example, in the shipment of motor vehicles with a greater height than a normal motor car, such as a van or off-road vehicle.

It is clear that the platform 4 can be raised and stopped in any intermediate position among those illustrated in the above figures, It is thus always possible to optimize exploitation of the useful height, for example by loading a van and raising the platform 4 only a few tens of centimetres, so that low, long packages such as packs of boards and the like can be slipped in underneath. In the raised position or in each of the positions of the platform 4, safety locking means are provided that can be chosen among various known mechanical, hydraulic or electric means and will not be described here in detail.

It should be noted that the chains 6 end in a counterweight 11 which helps them to descend inside the head wall, opposite the entrance door. This removes the need for wheels on which to wind the chains 6 when the platform 4 is raised.

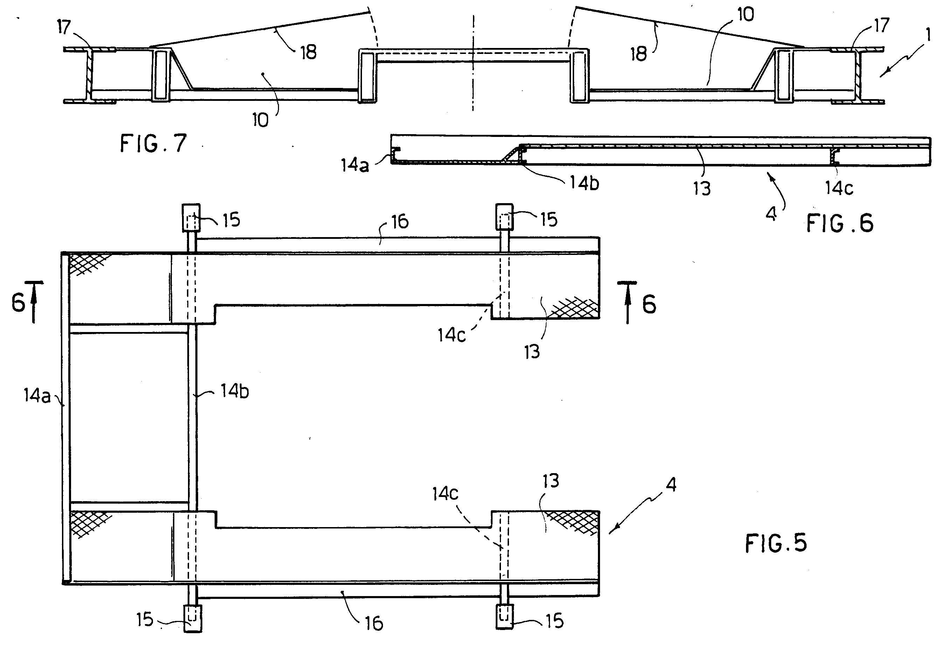

From Figure 5 it can be seen that the platform 4 has an axially symmetrical C-shaped structure, consisting essentially of a pair of elongated plates 13 supported by three crosspieces 14a, 14b and 14c. The head crosspiece 14a, that is to say the one adjacent to the head wall 12, extends between the outer edges of the plates 13, whilst the other two crosspieces extend beyond these edges and terminate with end connections 15. These connections 15 are shaped to slide in the side uprights 5, and the chains 6 are coupled to them.

In order to leave space for the roof of the motor car underneath, the rear crosspiece 14c is interrupted, that is it extends only up to the inner edge of the plates 13. To stiffen the structure, therefore, on the outside of each plate 13 there is a square longitudinal tube 16 that extends from the intermediate crosspiece 14b to the rear end of the platform 4.

Lastly, Figure 7 shows a cross section of the base 1 that has a pair of lowered longitudinal wheel tracks 10, as mentioned earlier. By giving the base 1 this profile it is possible to gain a dozen cm with respect to the height of the outer side members 17, which is sufficient to be able to accommodate two cars one on top of the other within the standard height of the container. Should it be necessary to restore the flat surface of the base 1 for a different use, metal sheets 18 can be provided to cover the wheel tracks 10. These covering sheets 18 can be permanently hinged to the outside of the wheel tracks 10, so that when they are raised and fixed against the side walls they take up virtually no space.

From the above it is obvious that the present container fulfills all the pre-established aims of independence and flexibility of use, since it comprises in itself all the elements needed to vary its method of use.

It is clear that the embodiment of the container according to the invention described and illustrated above represents only an example open to numerous variations. In particular, the shape and size of the platform 4 can be freely changed according to specific requirements, so that it occupies the whole or only part of the length of the container. It is also possible to provide two or more independent platforms inside a single container. Likewise, the elements of the lifting mechanism consisting of chains 6, geared motor 7 and pinions 9 can be replaced by other mechanically equivalent elements, such as cables, gears etc. The whole mechanism could also be of the hydraulic or pneumatic type, even with a power reservoir so that it does not have to rely on an external power supply.

Possible additions and/or modifications can therefore be made to the container forming the subject matter of the present invention without departing from the scope of the invention.

## Claims

1. A containing device having a structure comprising a base (1), a parallelepiped framework (2), a roof (3) and four side walls of which one comprising an entrance door, characterized in that said structure also comprises at least two pairs of side uprights (5), a platform (4) sliding vertically along said side uprights (5), as well as a lifting mechanism that provides said platform (4) with vertical movement.

2. A device according to claim 1, characterized in that the lifting mechanism comprises chains (6) driven by a geared motor (7) through a horizontal shaft (8) and a plurality of transmission pinions (9), on which said chains (6) engage until they descend along the uprights (5) and hook onto the platform (4).

3. A device according to claim 1 or 2, characterized in that the platform (4) has an axially symmetrical structure consisting basically of a pair of elongated plates (13) supported by crosspieces (14a, 14b, 14c), of which the head crosspiece (14a) extends between the outer edges of said plates (13) whilst the other two crosspieces extend beyond these edges and terminate in end connections (15) which are shaped to slide in the side uprights (5) and to which the lifting mechanism is coupled.

4. A device according to claim 3, characterized in that the platform (4) has a C-shaped structure with the rear crosspiece (14c) interrupted extending only up to the inner edge of the plates (13), a longitudinal tube (16) being situated outside each plate (13) and extending from the intermediate crosspiece (14b) to the rear end of the platform (4).

5. A device according to one or more of the preceding claims, characterized in that the base (1) has a pair of longitudinal wheel tracks (10) depressed with respect to the height of the external longitudinal members (17) of the base (1), said wheel tracks (10) being of a suitable width and distance apart even for motor cars with a very wide wheel base.

6. A device according to claim 5 characterized in that said wheel tracks are depressed about 12 cm.

7. A container according to claim 5, characterized in that it also comprises a plurality of metal sheets (18) of such a size as completely to cover the wheel tracks (10) in order to make the surface of the base (1) flat again, said metal sheets (18) being hinged to the outside of the wheel tracks (10) so as to turn between the above horizontal covering position and a vertical position in which they are arranged substantially along the side walls of the device.

8. A device according to claim 1 characterized in that said lifting mechanism comprises fluid actuators.

9. A device according to claim 1 characterized in that it comprises safety stop means to lock the platform in the raised positions.

10. A device according to the preceding claims characterized in that it is realized as a container or as a swapbody.
